# EUROPEAN PATENT SPECIFICATION

(11) **EP 4 230 994 B1**
(45) Date of publication and mention of the grant of the patent: **14.05.2025**
(21) Application number: 23150391.3
(22) Date of filing: 05.01.2023
(51) Int. Cl.: G01N 15/1031, G01N 15/02, G01N 15/10, G01N 15/12, G01N 15/00

(54) **OBJECT IDENTIFICATION METHOD AND OBJECT IDENTIFICATION APPARATUS**
VERFAHREN UND VORRICHTUNG ZUR IDENTIFIZIERUNG VON OBJEKTEN
PROCÉDÉ D'IDENTIFICATION D'OBJET ET APPAREIL D'IDENTIFICATION D'OBJET

(30) Priority: 16.02.2022 JP 2022021902
(43) Date of publication of application: 23.08.2023
(73) Proprietor: INSTITUTE OF SCIENCE TOKYO, Tokyo 152-8550 (JP); DENSO CORPORATION, Kariya-city, Aichi-pref., 448-8661 (JP)
(72) Inventor: YAMAMOTO, Takatoki, TOKYO, 152-8550 (JP); NUKAZUKA, Akira, AICHI-PREF, 448-8661 (JP); HAYAKAWA, Kei, AICHI-PREF, 448-8661 (JP); KANO, Kazuhiko, AICHI-PREF, 448-8661 (JP)
(74) Representative: Opilex

(56) References cited:
- US-A1- 2012 103 817
- US-A1- 2016 091 479
- US-B1- 6 437 551
- KAREN C CHEUNG ET AL: "Microfluidic impedance-based flow cytometry", CYTOMETRY A, WILEY-LISS, HOBOKEN, USA, no. 7, 21 May 2010 (2010-05-21), pages 648 - 666, XP072330357, ISSN: 1552-4922, DOI: 10.1002/CYTO.A.20910

## Description

### BACKGROUND

The present disclosure relates to an object identification method and an object identification apparatus.

A polymerase chain reaction (PCR) method and an immunochromatographic method are known as methods for detecting a virus, a microorganism, or a viroid (hereinafter also referred to simply as a virus or the like). Meanwhile, as other detection methods, a sensing method for a virus or the like through electrical measurement has been studied. Examples of the electrical measurement method include a method in which viruses or the like to be detected are dispersed in water and these viruses or the like are electrically detected as particles. In order to prevent infectious diseases and the like and prevent the spread thereof, it has been desired to detect a virus or the like in various environments such as in indoor environments, in barns, and in outdoor environments. The aforementioned electrical measurement method is suitable for sensing in such environments (Japanese Unexamined Patent Application Publications No. 2020-202824 and No. 2020-098211). US 6437551 B1 relates to microfluidic devices with microelectrodes.

### SUMMARY

As described above, there is a need for a technology for quickly and accurately identifying a virus or the like in an environment in order to prevent infectious diseases and the like and prevent the spread thereof. In view of the above-described need and the like, an object of the present disclosure is to provide an object identification method and an object identification apparatus capable of quickly and accurately identifying a virus or the like.

An object identification method according to an aspect of the present disclosure includes: feeding an object dispersed in a solvent to a micro-channel; applying an AC (Alternating Current) voltage to a measurement electrode provided at the micro-channel and measuring an AC characteristic of the object when the object passes through the micro-channel; and determining a combined impedance and a phase by using the measured AC characteristic and identifying the object by using the determined combined impedance and the phase.

An object identification apparatus according to an aspect of the present disclosure includes: a micro-channel through which an object dispersed in a solvent flows; two measurement electrodes provided at the micro-channel; a measurement circuit configured to apply an AC voltage to the two measurement electrodes and measure an AC characteristic of the object when the object passes through the micro-channel; and an object identification unit configured to determine a combined impedance and a phase by using the measured AC characteristic and identify the object by using the determined combined impedance and the phase.

The object identification apparatus is characterised in that the object identification unit is further configured to determine parameters corresponding to a resistive component, a ζ-potential, and a dielectric constant, respectively, and to identify the object by using the determined parameters corresponding to the resistive component, the ζ-potential, and the dielectric constant|.

According to the present disclosure, it is possible to provide an object identification method and an object identification apparatus capable of quickly and accurately identifying a virus or the like.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 shows a diagram for explaining an example of a configuration of an object identification apparatus according to an embodiment;
Fig. 2 shows a flowchart for explaining an object identification method according to an embodiment;
Fig. 3 shows a diagram for explaining an example of a method for identifying an object;
Fig. 4 shows a diagram for explaining an AC characteristic of an object;
Fig. 5 shows a diagram for explaining an AC characteristic of an object;
Fig. 6 shows a diagram for explaining a case where an AC characteristic is measured by using a lock-in amplification method;
Fig. 7 shows a diagram for explaining a case where an AC characteristic is measured by using a lock-in amplification method;
Fig. 8 shows a top view for explaining another example of a micro-channel;
Fig. 9 shows a top view for explaining another example of a micro-channel;
Fig. 10 shows a cross-sectional view for explaining another example of a micro-channel;
Fig. 11 shows a graph showing an AC characteristic measured by using a lock-in amplification method;
Fig. 12 shows graphs showing measurement results of various beads;
Fig. 13 shows graphs showing measurement results of reference samples having virus sizes;
Fig. 14 show a graph showing measurement results of reference samples having a virus size;
Fig. 15 shows a graph showing measurement results of reference samples having a virus size;
Fig. 16 shows graphs showing measurement results of a T4 phage and a baculovirus;
Fig. 17 shows graphs showing measurement results of influenza viruses;
Fig. 18 shows graphs showing measurement results of various viruses;
Fig. 19 shows a graph showing measurement results of pediococcus and E. coli;
Fig. 20 shows a graph showing measurement results of a measurement sample and a reference sample;
Fig. 21 shows a graph showing measurement results in a case where AC measurements are carried out while applying a DC bias voltage to particles whose surfaces are negatively charged;
Fig. 22 shows a graph showing measurement results of ζ-potentials;
Fig. 23 shows a graph showing measurement results of dielectric constants; and
Fig. 24 shows graphs showing measurement results of dielectric constants.

### DESCRIPTION OF EMBODIMENTS

Embodiments according to the present disclosure will be described hereinafter with reference to the drawings.

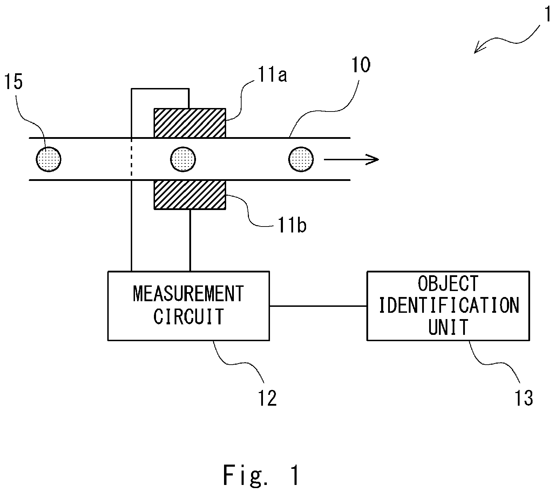

Fig. 1 shows a diagram for explaining an example of a configuration of an object identification apparatus according to an embodiment. As shown in Fig. 1, the object identification apparatus 1 according to this embodiment includes a micro-channel 10, measurement electrodes 11a and 11b, a measurement circuit 12, and an object identification unit 13. The object identification apparatus 1 according to this embodiment is an apparatus used to identify an object to be measured such as a virus, a bacterium, and a microorganism. Note that the object identification apparatus 1 according to this embodiment can also identify an object other than viruses, bacteria, and microorganisms as long as the object can be dispersed in a solvent.

The micro-channel 10 is a channel (e.g., a flow path) through which objects 15 dispersed in a solvent flow. The micro-channel 10 has such a width that only one object 15 can pass therethrough. By adopting the above-described configuration, it is possible to successively measure the AC (Alternating Current) characteristics of objects 15 one by one. That is, since the objects 15 successively pass the micro-channel 10 one by one, the measurement circuit 12 can successively measure the AC characteristics of the objects 15 one by one.

In this embodiment, an ionic liquid can be used as the solvent. Further, the objects 15 are viruses, bacteria, microorganisms, or the like. Note that the objects 15 may be any objects other than viruses, bacteria, and microorganisms as long as they can be dispersed in the solvent. Further, in this embodiment, a liquid other than the ionic liquid (e.g., an aqueous solution) may be used as the solvent. Further, the atmosphere may be used as the medium, and in this case, the objects 15 may be dispersed in the atmosphere.

The width of the micro-channel 10 can be determined according to the size of the object 15 to be measured. For example, when the objects 15 are viruses having a particle size (or a particle diameter, e.g., a mean particle size or a mean particle diameter) of about 100 nm, the width of the micro-channel 10 can be between 150 nm and 400 nm. Further, for example, when the objects 15 are bacteria having a particle size of about 1 µm, the width of the micro-channel 10 can be between 1.5 µm and 4 µm.

The measurement electrodes 11a and 11b are provided at the micro-channel 10 and are configured to be able to apply an AC voltage to objects 15 passing through the micro-channel 10. In the example of the configuration shown in Fig. 1, an example in which two measurement electrodes 11a and 11b are arranged so as to sandwich the micro-channel 10 therebetween. However, the place where the measurement electrodes 11a and 11b are disposed may be near the micro-channel 10, or may be any place where they can apply an AC voltage to the object 15.

The measurement circuit 12 is configured to apply an AC voltage to the measurement electrodes 11a and 11b and measure the AC characteristics of objects 15 when they pass through the micro-channel 10. For the measurement circuit 12, any circuit that can measure the AC characteristics of objects 15 may be used. The measurement circuit 12 is configured to be able to apply, to the measurement electrodes 11a and 11b, an AC voltage having a frequency between several kHz and several GHz, preferably between 1 kHz and 100 MHz, and more preferably between 1 MHz and 10 MHz. For example, a lock-in amplifier may be used for the measurement circuit 12. Details of the lock-in amplifier will be described later.

The object identification unit 13 is configured to determine (e.g., calculate) a combined impedance and a phase by using the AC characteristic measured by the measurement circuit 12, and identify the object by using the determined combined impedance and the phase. In this embodiment, parameters corresponding to a resistive component, a ζ-potential (zeta potential), and a dielectric constant, respectively, of the object 15 may be determined by using the combined impedance and the phase, and the object 15 may be identified by using the determined parameters corresponding to the resistive component, the ζ-potential, and the dielectric constant. For example, the object identification unit 13 may be formed by using a personal computer or the like.

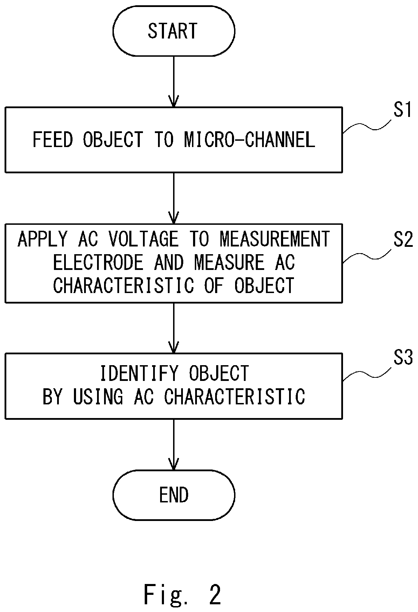

Next, an object identification method according to this embodiment will be described. The object identification method according to this embodiment can be performed by using the object identification apparatus 1 shown in Fig. 1. Fig. 2 shows a flowchart for explaining the object identification method according to this embodiment. The object identification method according to this embodiment will be described hereinafter with reference to Figs. 1 and 2.

In order to identify objects 15, firstly, the objects 15 dispersed in a solvent are fed to the micro-channel 10 (i.e., are made to flow through the micro-channel 10) (Step S1). Next, an AC voltage is applied to the measurement electrodes 11a and 11b provided at the micro-channel 10, and the AC characteristics of the objects 15 are measured when the objects 15 pass through the micro-channel 10 (Step S2). For example, the measurement circuit 12 applies an AC voltage having a frequency no lower than 1 kHz and no higher than 100 MHz (hereinafter also expressed as between 1 kHz and 100 MHz) to the measurement electrodes 11a and 11b. Note that, in this embodiment, the AC voltage may be continuously applied to measurement electrodes 11a and 11b in advance, and then objects 15 dispersed in the solvent may be fed to the micro-channel 10.

Next, the object 15 is identified by using the measured AC characteristic (Step S3). Specifically, a combined impedance and a phase are determined by using the measured AC characteristic, and the object 15 is identified by using the determined combined impedance and the phase.

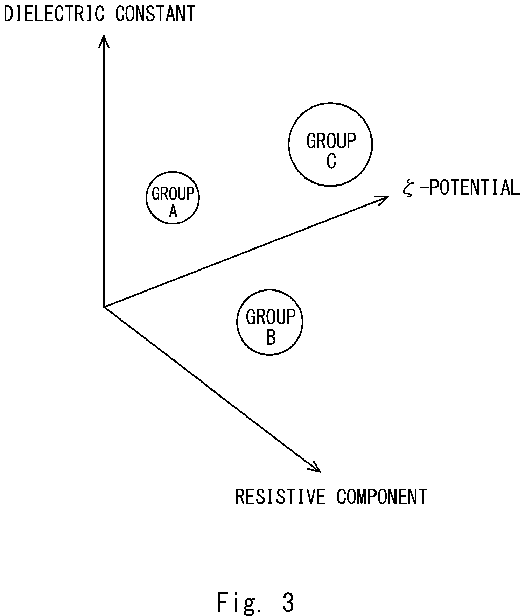

In this embodiment, parameters corresponding to a resistive component, a ζ-potential, and a dielectric constant, respectively, of the object 15 may be determined by using the combined impedance and the phase, and the object 15 may be identified by using the determined parameters corresponding to the resistive component, the ζ-potential, and the dielectric constant. For example, as shown in Fig. 3, the object 15 may be identified by mapping the parameters corresponding to the resistive component, the ζ-potential, and the dielectric constant of the object 15 on a three-dimensional coordinate system in which the axes represent the resistive component, the ζ-potential, and the dielectric constant, respectively. Note that the parameter corresponding to the resistive component is a parameter corresponding to the size of the object 15. The parameter corresponding to the ζ-potential is a parameter corresponding to the surface potential of the object 15. The parameter corresponding to the dielectric constant is a parameter corresponding to the structure, such as a spherical shell structure and a film capacity, of the object 15, or a parameter corresponding to the material of the object 15.

Objects 15 have different sizes, different surface potentials, and different structures according to their types. Therefore, it is possible to classify objects 15 into groups A, B and C by determining (e.g., calculating) their resistive components, ζ-potentials, and dielectric constants, which are parameters corresponding the aforementioned sizes, the surface potentials, and the structures, and mapping the parameters corresponding to the resistive components, the ζ-potentials, and the dielectric constants of the objects 15 onto a three-dimensional coordinate system like the one shown in Fig. 3. For example, it is possible to improve the accuracy of the identification of an object 15 by mapping measurement results of a plurality of types of objects 15 onto the three-dimensional coordinate system shown in Fig. 3, and thereby accumulating data thereof.

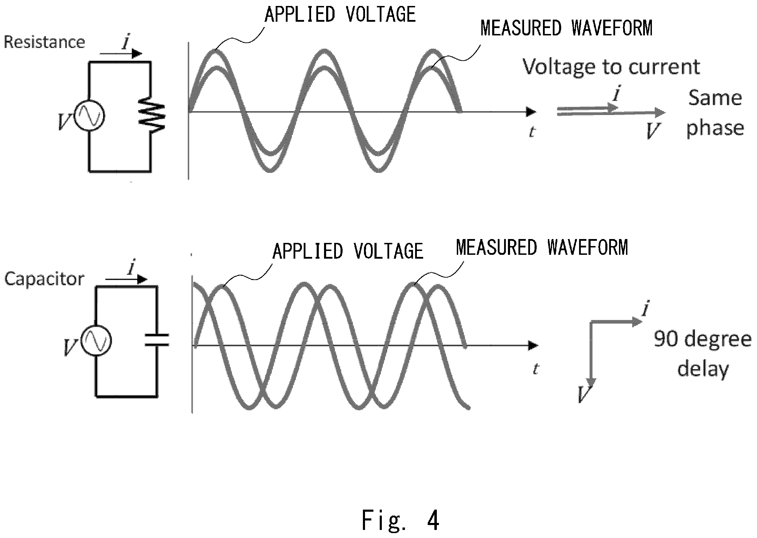

Further, in this embodiment, it is possible to determine (e.g., calculate) a combined impedance and a phase by using the below-shown method. An object 15, such as a virus, can be represented by an equivalent electric circuit including a resistive component and a capacitive component. Therefore, when the AC characteristics of an object 15 are measured, measured waveforms like those shown in Fig. 4 are obtained. Specifically, as shown in the upper part of Fig. 4, when an AC voltage is applied to the resistive component, an in-phase measured waveform (i.e., a measured waveform having the same phase as that of the AC voltage) is obtained. Further, as shown in the lower part of Fig. 4, when an AC voltage is applied to the capacitive component, a measured waveform of which the phase is delayed from that of the AC characteristic voltage by 90 degrees is obtained.

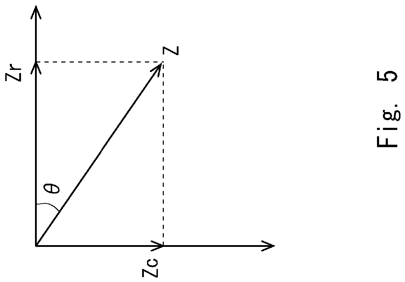

Further, the impedance Zr of the resistive component and the impedance Zc of the capacitive component can be expressed in a vector diagram as shown in Fig. 5. In Fig. 5, the combined impedance Z can be represented by a combined vector of the impedances Zr and Zc. Further, the phase θ can be expressed by a phase difference of the capacitive component with respect to the resistive component. In this way, the combined impedance Z and the phase θ can be determined.

Further, in this embodiment, an in-phase component, which corresponds to an AC characteristic, and a phase component deviated from the in-phase component may be extracted by using a lock-in amplifier, and a combined impedance and a phase are determined by using the extracted in-phase component and the phase component. Then, the object may be identified by using temporal changes of the combined impedance (i.e., changes of the combined impedance over time) and temporal changes of the phase (i.e., changes of the phase over time).

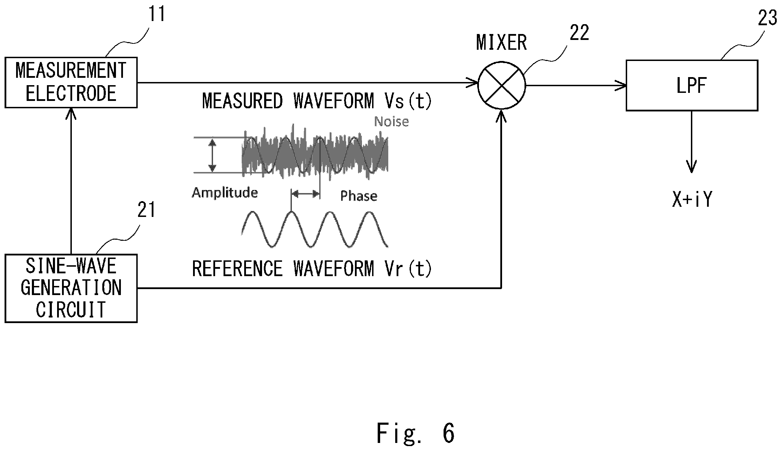

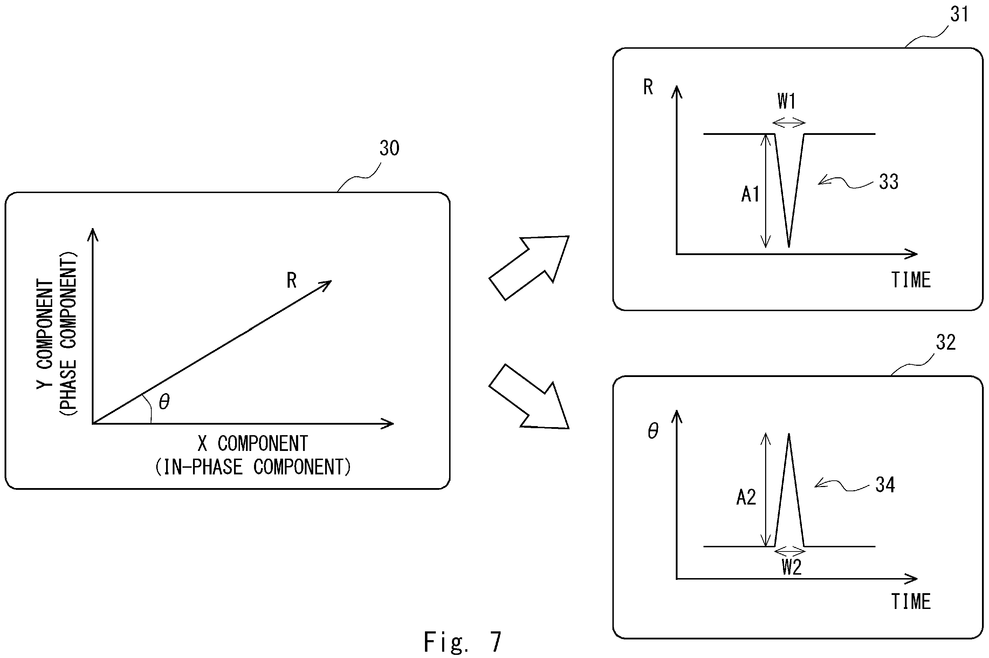

That is, in this embodiment, the combined impedance and the phase may be determined by using a lock-in amplifier for the measurement circuit 12 shown in Fig. 1. Figs. 6 and 7 show diagrams for explaining a case where AC characteristics are measured by using a lock-in amplifier. The lock-in amplifier shown in Fig. 6 includes a sine-wave generation circuit 21, measurement electrodes 11 (corresponding to the measurement electrodes 11a and 11b shown in Fig. 1), a mixer 22, and a low-pass filter (LPF) 23.

The sine-wave generation circuit 21 generates a sin wave (an AC voltage) and supplies the generated sin wave (the AC voltage) to the measurement electrodes 11. When the sin wave is supplied to the measurement electrodes 11, a measured waveform Vs(t) of the object 15 is obtained. The obtained measured waveform Vs(t) is supplied to the mixer 22. Further, the sin wave generated in the sine-wave generation circuit 21 is also supplied to the mixer 22 as a reference waveform Vr(t). Since the measured waveform Vs(t) is a waveform that reflects the resistive and capacitive components of the object 15, the amplitude of the measured waveform Vs(t) differs from that of the reference waveform Vr(t) and the phase of the measured waveform Vs(t) is deviated from that of the reference waveform Vr(t).

The mixer 22 multiplies the measured waveform Vs(t) by the reference waveform Vr(t). The low-pass filter 23 removes undesired high-frequency components contained in the signal multiplied in the mixer 22. The signal output from the low-pass filter 23 can be represented as "X+iY", and the X and Y components of the signal correspond to the real and imaginary parts, respectively, on the complex plane as shown in a graph 30 shown in Fig. 7. That is, the X component is the in-phase component and the Y component is the phase component. Then, the X and Y components in the graph 30 shown in Fig. 7 are converted (transformed) into a strength R (corresponding to the combined impedance) and a phase θ of the measured waveform Vs(t) by using trigonometry. A graph 31 shown in Fig. 7 shows temporal changes of the strength R (the combined impedance) after the conversion (transformation), and a graph 32 shown in Fig. 7 shows temporal changes of the phase θ after the conversion (transformation).

In this embodiment, it is possible to identify the object by using the temporal changes of the combined impedance R shown in the graph 31 shown in Fig. 7 and the temporal changes of the phase θ shown in the graph 32 shown in Fig. 7. Specifically, as shown in the graphs 31 and 32 shown in Fig. 7, when the object 15 passes through the micro-channel 10, the values of the combined impedance R and the phase θ change. For example, it is possible to identify the object by using a width W1 and an amplitude A1 of a waveform 33 of the changed combined impedance R and a width W2 and an amplitude A2 of a waveform 34 of the phase θ

For example, the parameter corresponding to the ζ-potential of the object 15 can be determined by using the width W1 of the waveform 33 of the combined impedance R. Further, the parameter corresponding to the resistive component of the object 15 can be determined by using the amplitude A1 of the waveform 33 of the combined impedance R. Further, the parameter corresponding to the dielectric constant of the object 15 can be determined by using the waveform 34 of the phase θ. When the parameter corresponding to the dielectric constant is determined, the phase θ is deviated from the in-phase component by 90 degrees.

Note that the equivalent electric circuit of the object 15 such as a virus is not necessarily be able to be represented by a simple RC circuit. That is, in some cases, the impedance is complicated. Therefore, in actuality, the impedance Zr (the real part of the impedance) does not necessarily correspond to the R component and the impedance Zc (the imaginary part of the impedance) does not necessarily correspond to the C component. For example, the impedance Zr (the real part of the impedance) may also have a capacitive component and/or the impedance Zc (the imaginary part of the impedance) may also have a resistive component.

As explained above, in this embodiment according to the present disclosure, the AC characteristic of the object 15 when the object 15 passes through the micro-channel 10 is measured, and the combined impedance and the phase are determined by using the measured AC characteristic. Then, the object 15 is identified by using the determined combined impedance and the phase. Therefore, according to this embodiment in accordance with the present disclosure, it is possible to provide an object identification method and an object identification apparatus capable of quickly and accurately identifying a virus. Further, in this embodiment according to the present disclosure, the micro-channel 10 has such a width that only one object 15 can pass therethrough at a time, so that objects 15 can be measured one by one.

Further, in this embodiment, in addition to the objects 15, reference samples for calibration may be dispersed in the solvent. When reference samples are dispersed in the solvent in addition to objects 15, the objects 15 can be accurately identified. That is, since the particle size and the like (including the ζ-potential and the dielectric constant) of the reference sample are known, the particle size and the like of the object 15 can be accurately measured by comparing the measurement result of the object 15 with that of the reference sample. As a result, the object 15 can be accurately identified. Further, since the object 15 and the reference sample can be measured under the same conditions (such as the same device, the same solvent, and the same electrode state), the object 15 and the reference sample can be accurately measured. Further, in this embodiment, since the object 15 and the reference sample can be measured simultaneously with each other, the measurement time can be reduced as compared with the case where the object 15 and the reference sample are measured separately from each other.

When the objects 15 and the reference samples are dispersed in the solvent, the solvent, in which the objects 15 and the reference samples are dispersed, is fed to the micro-channel 10, and the AC characteristic of the object 15 when the object 15 passes through the micro-channel 10 is measured. Further, the AC characteristic of the reference sample when the reference sample passes through the micro-channel 10 is measured. Then, the object 15 is identified based on the combined impedance and the phase determined by using the AC characteristic of the object 15 and the combined impedance and the phase determined by using the AC characteristic of the reference sample.

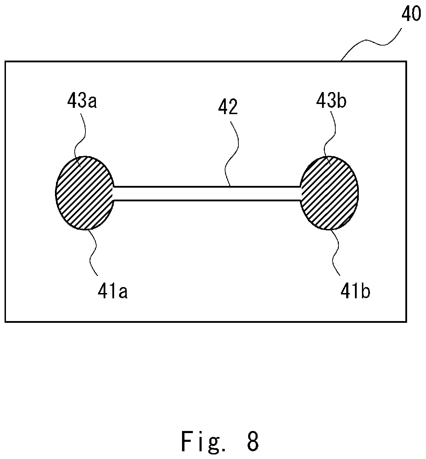

Further, the shape of the micro-channel 10 and those of the measurement electrodes 11a and 11b in this embodiment are not limited to the shapes shown in Fig. 1. Figs. 8 to 10 show diagrams for explaining other examples of the micro-channel. In the example of the configuration shown in Fig. 8, a feeding port 41a, a micro-channel 42, and a discharge port 41b are formed in a substrate 40.

Objects dispersed in a solvent are fed from the feeding port 41a, and then pass through the micro-channel 42 and are discharged from the discharge port 41b. In the example of the configuration shown in Fig. 8, measurement electrodes 43a and 43b are formed in the parts of the substrate where the feeding port 41a and the discharge port 41b are respectively formed (parts of the surface different from the part where the hole, through which the solvent passes, is formed). In the example of the configuration shown in Fig. 8, since the AC characteristic can be measured while the object or the like is passing through the micro-channel 42, the measurement time can be increased.

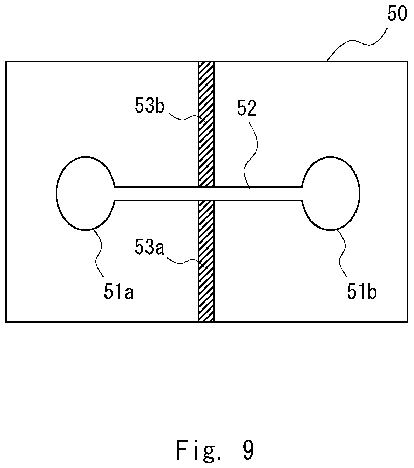

In the example of the configuration shown in Fig. 9, a feeding port 51a, a micro-channel 52, and a discharge port 51b are formed in a substrate 50. Objects dispersed in a solvent are fed from the feeding port 51a, and then pass through the micro-channel 52 and are discharged from the discharge port 51b. In the example of the configuration shown in Fig. 9, measurement electrodes 53a and 53b are formed so as to sandwich a part of the micro-channel 52. In the example of the configuration shown in Fig. 9, since the measurement electrodes 53a and 53b are formed so as to sandwich a part of the micro-channel 52, the influences of the resistive and capacitive components of the micro-channel 52 itself can be reduced and therefore the S/N ratio can be improved.

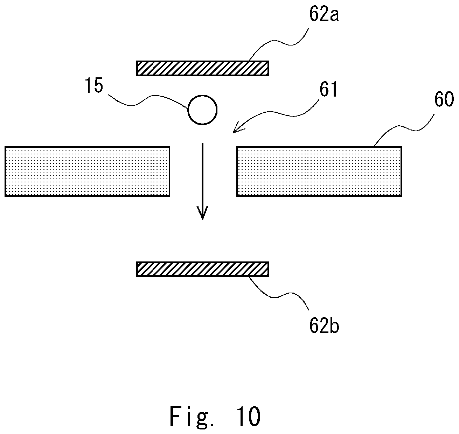

In the example of the configuration shown in Fig. 10, a micro-channel 61 is formed by forming a roughly circular hole through a substrate 60. That is, as shown in the cross-sectional view shown in Fig. 10, the micro-channel 61 is formed by forming a hole through the substrate 60, and measurement electrodes 62a and 62b are disposed on the upper and lower surface sides, respectively, of the substrate 60. In the example of the configuration shown in Fig. 10, the micro-channel 61 can be easily formed through the substrate 60. Note that the shape of the micro-channel in this embodiment is not limited to the shapes shown in Figs. 1, 8, 9 and 10. That is, the micro-channel may have other shapes.

### [Examples]

Next, examples according to the present disclosure will be described.

Firstly, a sample solution was prepared by mixing phosphate-buffered saline (154.0 mM of NaCl, 5.6 mM of Na₂PO₄, 1.07 mM of KH₂PO₄), a surfactant (0.1% of Tween 20 or Trinton-X), and viruses (105 to 1,010 viruses/mL). For the micro-channel, the micro-channel shown in Fig. 10 was used. The diameter of the hole of the micro-channel was 100 nm to 4,000 nm. Further, in this example, the AC characteristic of the object (i.e., the virus) was measured by using the lock-in amplifier shown in Fig. 6. Note that, in the below-described example, a reference sample or the like was also used instead of the virus.

The measurement conditions were as follows.
- Waveform: Sine wave
- Measurement frequency: 1 kHz to 1 MHz
- Applied voltage: 0.1 to 1 V
- Applied pressure: 0.1 to 1 Pa

Note that the applied pressure is a pressure that is applied when the solvent is fed to micro-channel (i.e., is made to flow through the micro-channel).

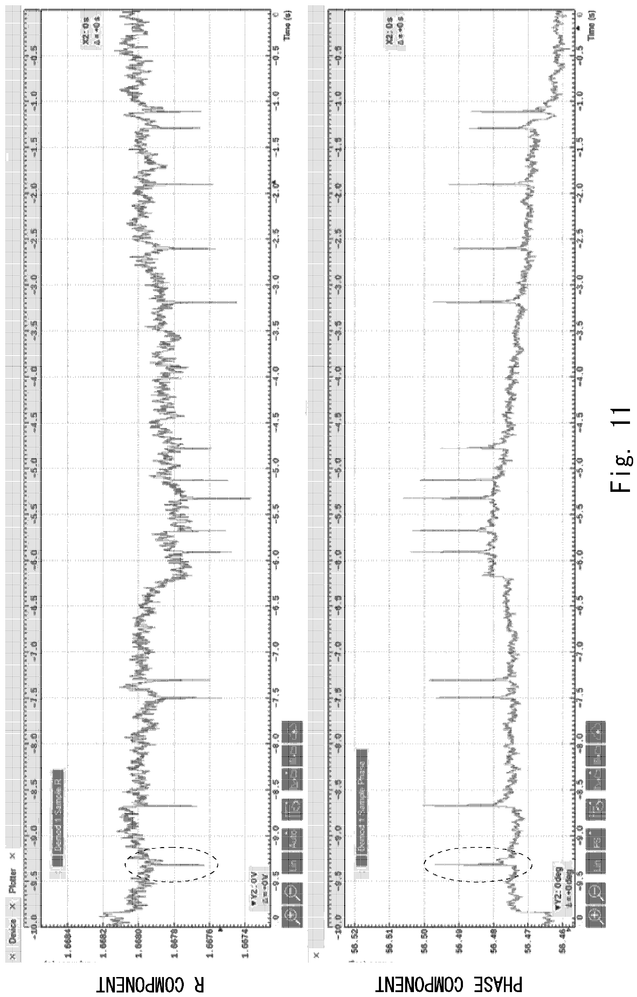

Fig. 11 shows temporal changes of the R component (the combined impedance) and the temporal changes of the phase component (the phase θ), which are the results of the measurement carried out under the above-described conditions. As shown in Fig. 11, when the object (the virus) passed through the micro-channel, the amplitude value changed in the graphs of the R component and the phase component. That is, the amplitude value decreased in the graph of the R component and increased in the graph of the phase component. Then, by using the above-described method, the particle size (the particle diameter) of the object was determined from the waveforms in the graphs shown in Fig. 11.

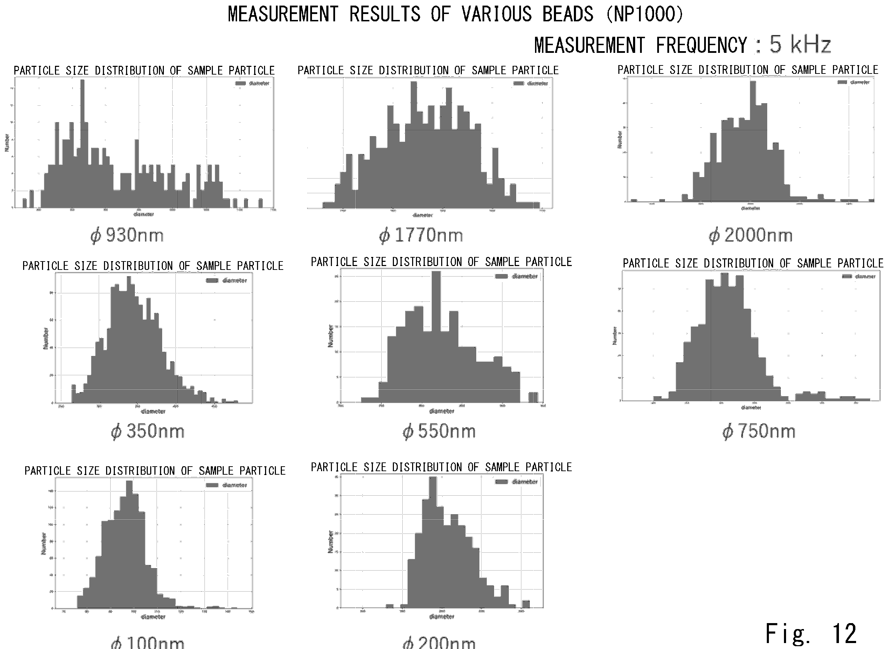

Figs. 12 to 20 show distributions of particle sizes of objects, which are measurement results.

Fig. 12 shows measurement results of various beads. Note that the measurement results shown in Fig. 12 are those in the cases where an aqueous solution was used as the solvent. Further, the measurement frequency was 5 kHz. In Fig. 12, samples of a wide range of particle sizes, in particular, a range of diameters from 100 nm to 2,000 nm, were measured. As shown in Fig. 12, for each sample, the particle size was able to be accurately measured.

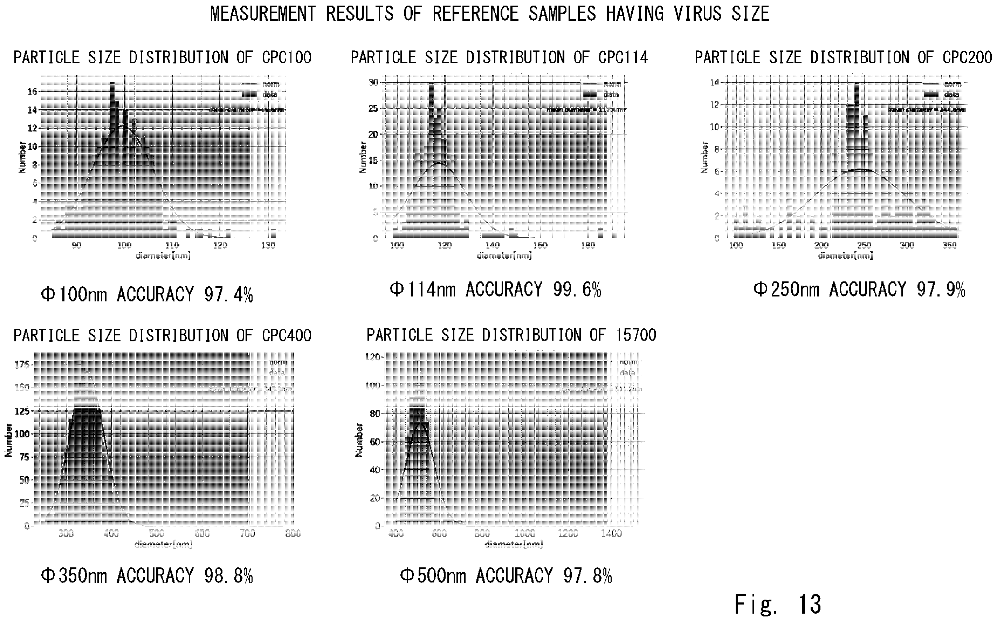

Fig. 13 shows measurement results of reference samples having a virus size (i.e., a size roughly equal to the size of the virus). In Fig. 13, reference samples having particle sizes, i.e., diameters, of 100 nm, 114 nm, 250 nm, 350 nm, and 500 nm were measured. As shown in Fig. 13, the accuracy of measurement results was 97% or higher for each reference sample, meaning that the particle sizes of the reference samples were able to be accurately measured.

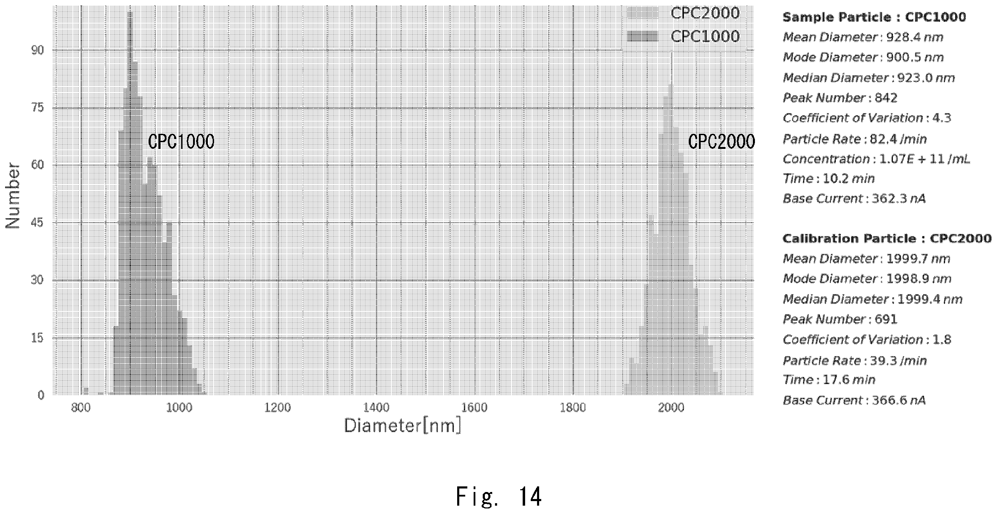

Fig. 14 shows measurement results of reference samples having a virus size. In Fig. 14, reference samples having particle sizes, i.e., diameters, of 930 nm (CPC 1000) and 2,000 nm (CPC 2000) were measured. As shown in Fig. 14, the measurement result of a particle having a diameter of 930 nm was 928.4 nm, meaning that the measurement error was 1.6 nm (= 0.17%) and the coefficient of variation was 4.3. Further, the measurement result of a particle having a diameter of 2,000 nm was 1,999.7 nm, meaning that the measurement error was 0.3 nm (= 0.01%) and the coefficient of variation was 1.8. Therefore, the particle sizes of the reference samples were able to be measured with extremely high accuracy.

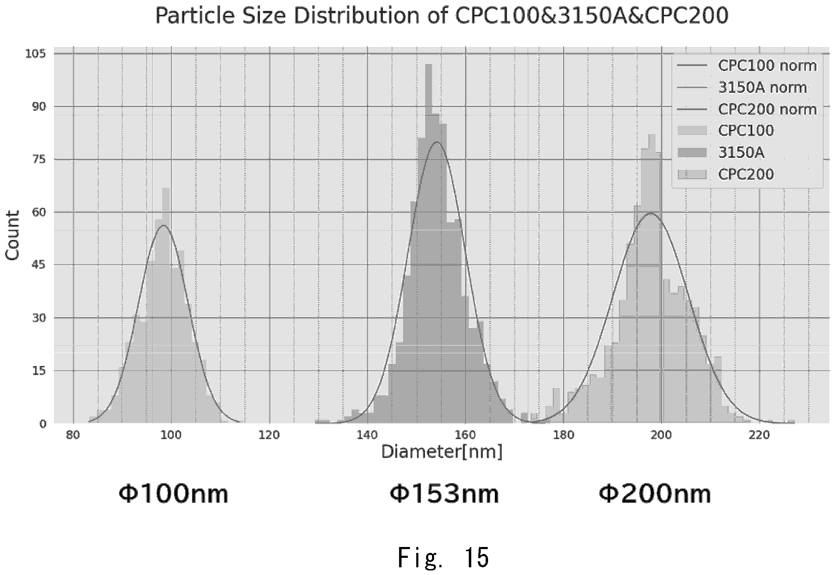

Fig. 15 shows measurement results of reference samples having a virus size. In Fig. 15, reference samples having particle sizes, i.e., diameters, of 100 nm, 153 nm, and 200 nm were measured. As shown in the measurement results shown in Fig. 15, the particle sizes of these reference samples were also accurately measured.

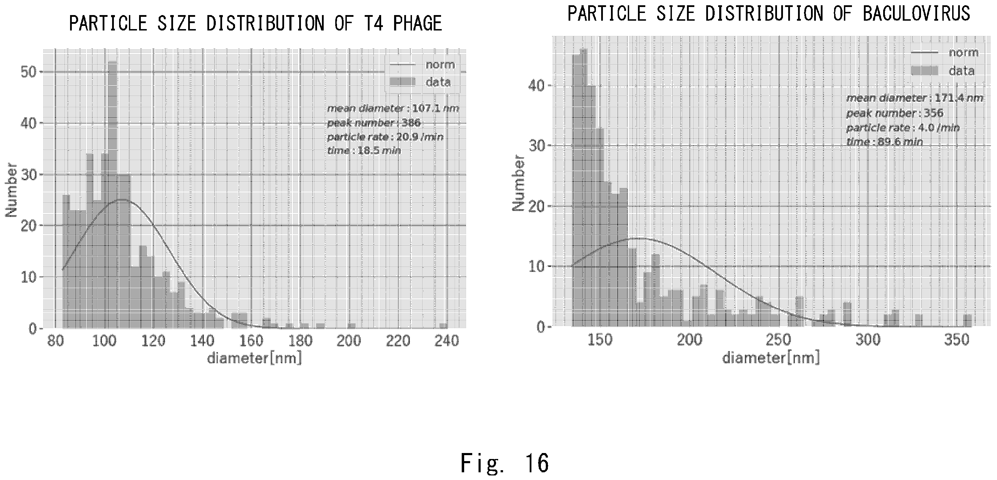

Fig. 16 shows graphs showing measurement results of a T4 phage and a baculovirus. As shown in Fig. 16, the mean particle size (the mean particle diameter) of the T4 phage was 107.1 nm and that of the baculovirus was 171.4 nm. As shown above, the particle sizes of the T4 phage and the baculovirus were able to be accurately measured by using the present disclosure.

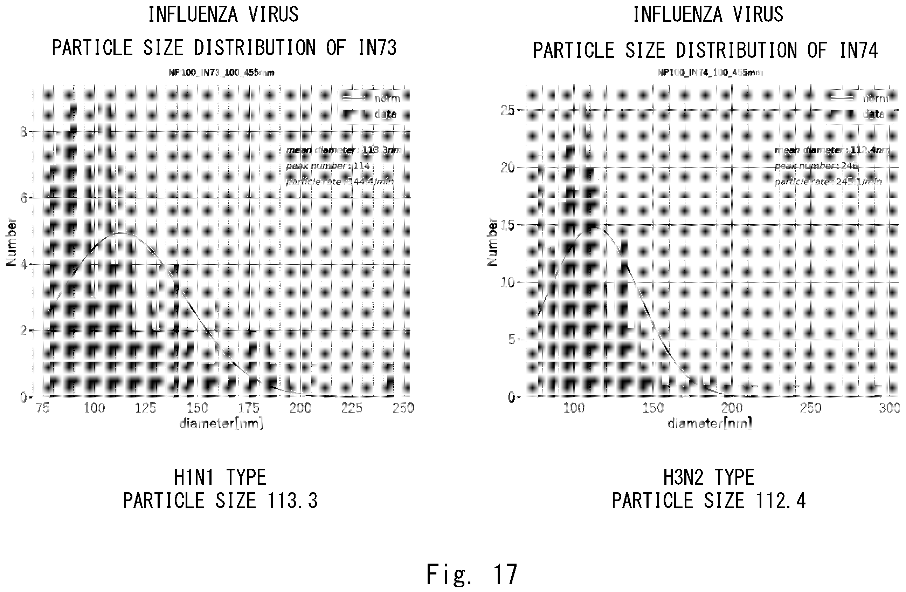

Fig. 17 shows graphs showing measurement results of influenza viruses. As shown in Fig. 17, the mean particle size of H1N1 influenza viruses was 113.3 nm, and that of H3N2 influenza viruses was 112.4 nm. As shown above, the particle sizes of influenza viruses were able to be accurately measured by using the present disclosure.

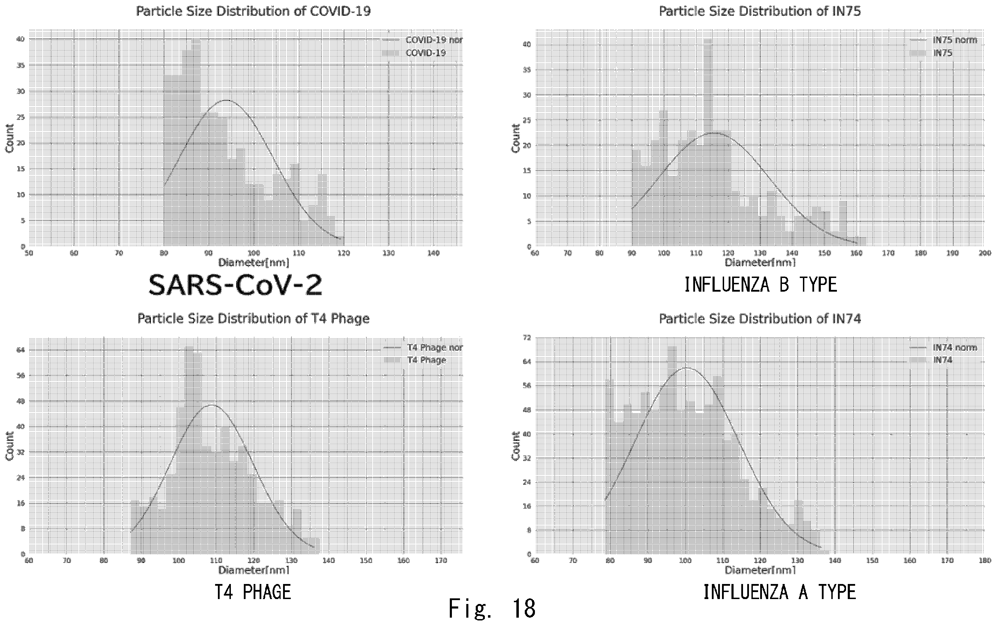

Fig. 18 shows graphs showing measurement results of various viruses, and in particular, shows measurement results of a SARS-COV-2 virus, an influenza A virus, an influenza B virus, and a phage T4. As shown in Fig. 18, the particle sizes of these viruses were also be able to be accurately measured.

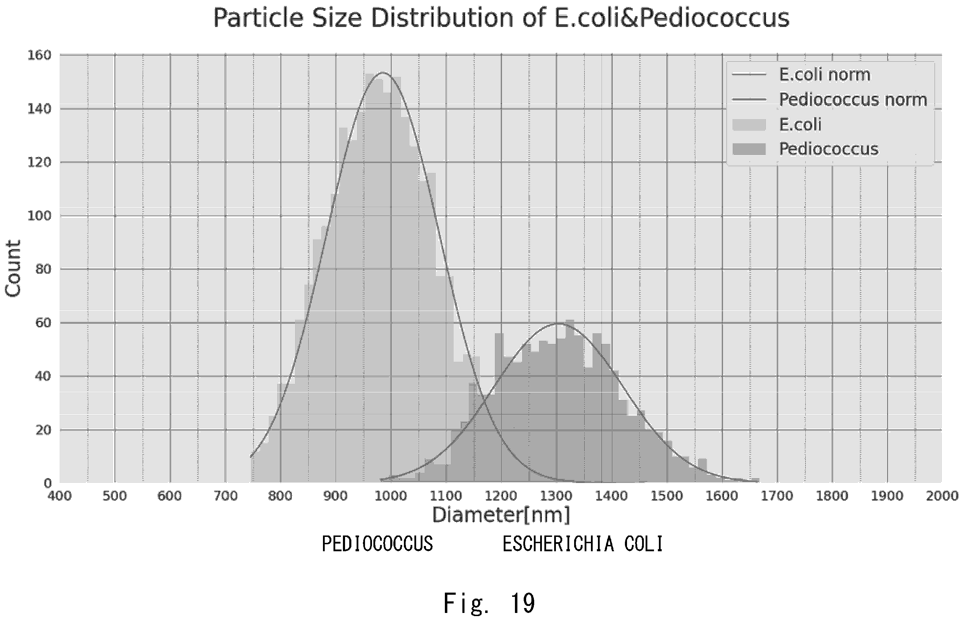

Fig. 19 shows a graph showing measurement results of a pediococcus and Escherichia coli. As shown in Fig. 19, the particle sizes of the pediococcus and the Escherichia coli were also be able to be accurately measured.

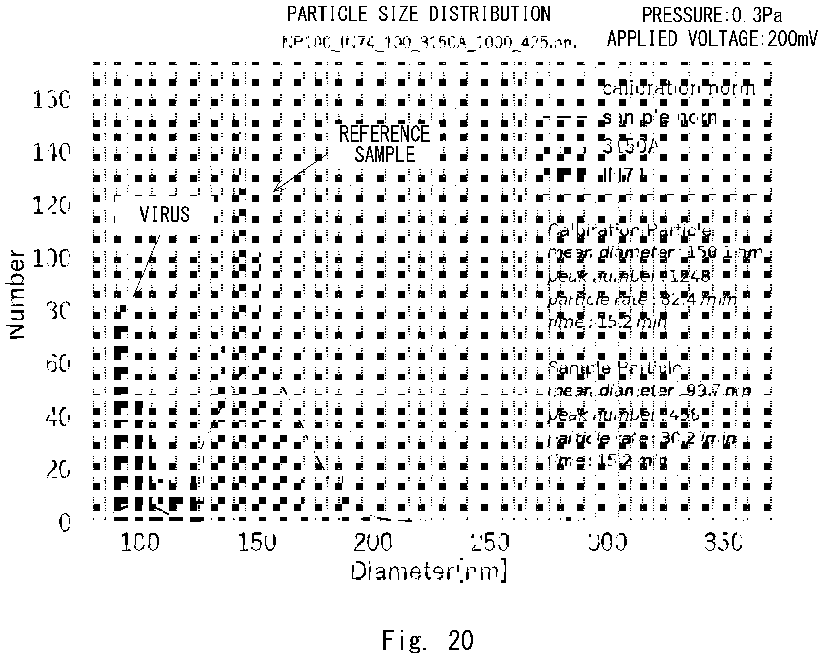

Fig. 20 shows a graph showing measurement results of a measurement sample (an influenza virus) and a reference sample. That is, Fig. 20 shows measurement results in a case where a reference sample for calibration is dispersed in the solvent in addition to the measurement sample. As shown in Fig. 20, the mean particle size of the reference sample was 150 nm. Further, the mean particle size (the calibrated mean particle size) of the measurement sample was 99.7 nm. As shown above, the particle size of the measurement sample (the influenza virus) was able to be accurately measured by carrying out in-line calibration using the reference sample.

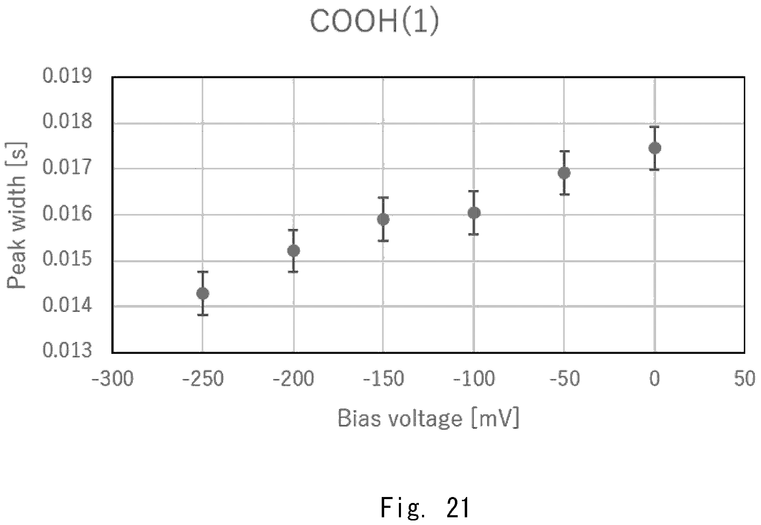

Fig. 21 shows a graph showing measurement results in a case where AC measurements are carried out while applying a DC (Direct Current) bias voltage to particles whose surfaces are negatively charged. Fig. 21 shows peak widths in a case where AC measurements are carried out under the condition of 3 kHz while applying a DC bias voltage (in the x-axis direction) to particles which have a particle size of 250 nm and of which the surfaces are modified with "-COOH". Note that these peak widths correspond to the width W1 of the waveform 33 of the combined impedance R shown in the graph 31 shown in Fig. 7.

In many cases, bio-nanoparticles such as viruses and exosomes are negatively charged. When the surface is negatively charged ("-COOH" in Fig. 21), the more the bias voltage is increased to the "negative" side, the more the electrophoretic force increases and hence the more the particle velocity increases. As a result, the peak width decreases. That is, as shown in Fig. 21, the more the bias voltage is reduced, the more the peak width decreases. Therefore, the ζ-potential can be determined from the peak width that is exhibited when a predetermined bias voltage is applied.

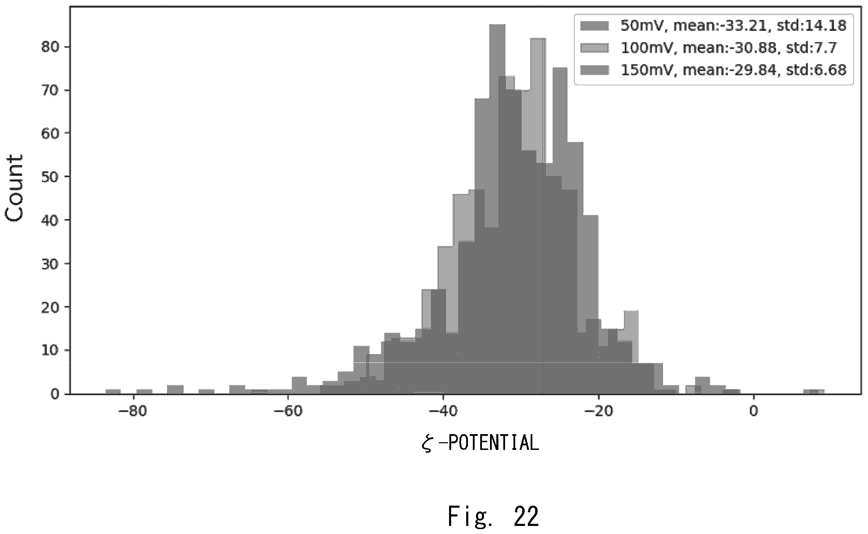

Fig. 22 shows a graph showing measurement results of the ζ-potential. When a method in related art was used, in some cases, the ζ-potential changed when the applied voltage (the bias voltage) was changed. In contrast, when the measurement method according to the present disclosure is used, as shown in Fig. 22, the value of the ζ-potential is stable even when the applied voltage (the bias voltage) is changed to 50 mV, to 100 mV, and to 150 mV. Therefore, the ζ-potential can be accurately measured by using the method according to the present disclosure.

That is, in the method in related art, since DC measurement was used, there was the following problem. That is, when the measurement voltage was increased to increase the sensitivity of the measurement, the driving voltage for the electrophoresis also increased, and therefore the particle velocity increased, thus making the measurement difficult. In contrast, when the AC measurement is used as described in the present disclosure, it is possible, by using the AC for the measurement of the ζ-potential and using the DC for the electrophoresis, to control the measurement of the ζ-potential and that of the electrophoresis independently of each other. Therefore, by increasing the sensitivity of the measurement of the ζ-potential while slowing down the electrophoresis, the ζ-potential can be measured in a more accurate and more stable manner.

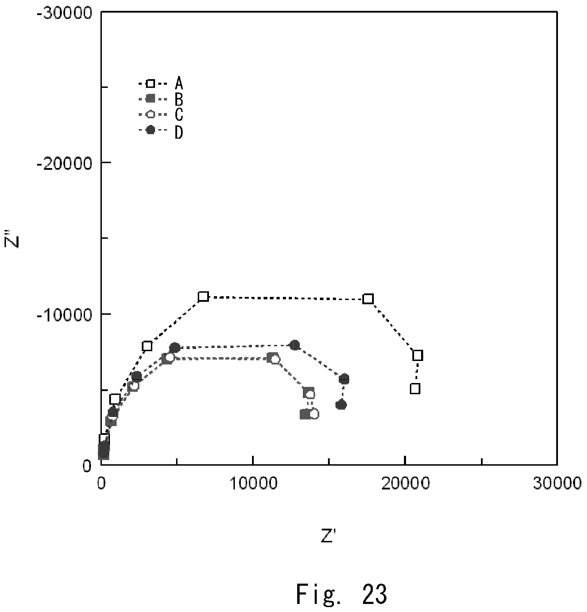

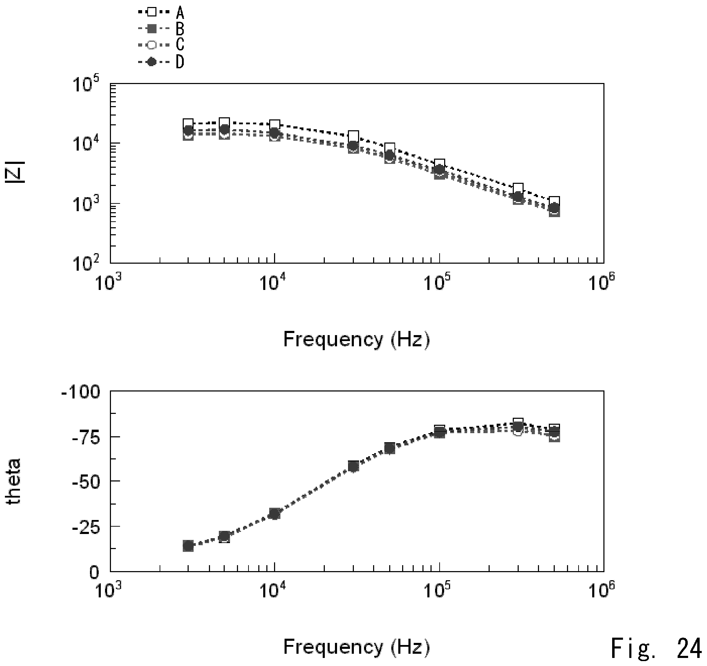

Figs. 23 and 24 show graphs showing measurement results of dielectric constants. Fig. 23 shows measurement results of the Z' and Z" components of the impedances of samples A to D. The upper part of Fig. 24 shows a graph showing the frequency dependence of the impedance obtained from the measurement results shown in Fig. 23. The lower part of Fig. 24 shows a graph showing the frequency dependence of the phase θ obtained from the measurement results shown in Fig. 23.

The sample A shown in Figs. 23 and 24 is polystyrene particles having a diameter of 1.06 µm, and the sample B is polystyrene particles which have a diameter of 0.99 µm and of which the surfaces are modified with COOH. Further, the sample C is silica particles having a diameter of 0.96 µm, and the sample D is magnetic particles which have a diameter of 1 µm and of which the surfaces are modified with COOH. From the measurement results shown in Fig. 23 and Fig. 24, the following results were obtained. That is, the electric capacity of the sample A was 336 pF: the electric capacity of the sample B was 485 pF; the electric capacity of the sample C was 511 pF; and the electric capacity of the sample D was 444 pF.

## Claims

1. An object identification method comprising:
feeding an object (15) dispersed in a solvent to a micro-channel (10);
applying an AC (Alternating Current) voltage to two measurement electrodes (11a, 11b) provided at the micro-channel and measuring an AC characteristic of the object when the object passes through the micro-channel; and
determining a combined impedance and a phase by using the measured AC characteristic;
and identifying the object by using the determined combined impedance and the phase;
**characterized in that**
parameters corresponding to a resistive component, a ζ-potential, and a dielectric constant, respectively, of the object are determined by using the combined impedance and the phase,
the object is identified by using the determined parameters corresponding to the resistive component, the ζ-potential, and the dielectric constant.

2. The object identification method according to Claim 1, wherein the object (15) is identified by mapping the parameters corresponding to the resistive component, the ζ-potential, and the dielectric constant on a three-dimensional coordinate system in which its axes represent the resistive component, the ζ-potential, and the dielectric constant, respectively.

3. The object identification method according to Claim 1 or 2, wherein
the parameter corresponding to the resistive component is a parameter corresponding to a size of the object (15),
the parameter corresponding to the ζ-potential is a parameter corresponding to a surface potential of the object (15), and
the parameter corresponding to the dielectric constant is a parameter corresponding to at least one of a structure and a material of the object (15).

4. The object identification method according to any one of Claims 1 to 3, wherein
an in-phase component and a phase component are extracted, the in-phase component being a component corresponding to the AC characteristic, and the phase component being a component deviated from the in-phase component;
a combined impedance and a phase are determined by using the extracted in-phase component and the phase component; and
the object (15) is identified by using a temporal change of the combined impedance and a temporal change of the phase.

5. The object identification method according to Claim 4, wherein parameters corresponding to a resistive component and a ζ-potential of the object are determined by using a waveform indicating the temporal change of the combined impedance.

6. The object identification method according to any one of Claims 1 to 5, wherein
a reference sample for calibration is further dispersed in the solvent,
the solvent, in which the object and the reference sample are dispersed, is fed to the micro-channel (10),
an AC characteristic of the object when the object passes through the micro-channel is measured,
an AC characteristic of the reference sample when the reference sample passes through the micro-channel is measured, and
the object (15) is identified based on the combined impedance and the phase determined by using the AC characteristic of the object and the combined impedance and the phase determined by using the AC characteristic of the reference sample.

7. The object identification method according to any one of Claims 1 to 6,
wherein a frequency of an AC voltage applied to the measurement electrodes (11a, 11b) is between 1 kHz and 100 MHz.

8. The object identification method according to any one of Claims 1 to 7,
wherein the solvent is an ionic liquid or an aqueous solution.

9. The object identification method according to any one of Claims 1 to 8,
wherein the object (15) is at least one organism selected from the group consisting of a virus, a bacterium, and a microorganism.

10. The object identification method according to any one of Claims 1 to 9, wherein the micro-channel (10) has such a width that only one object can pass therethrough at a time.

11. An object identification apparatus comprising:
a micro-channel (10) through which an object dispersed in a solvent flows;
two measurement electrodes (11a, 11b) provided at the micro-channel;
a measurement circuit (12) configured to apply an AC voltage to the two measurement electrodes (11a, 11b) and measure an AC characteristic of the object when the object passes through the micro-channel; and
an object identification unit (13) configured to determine a combined impedance and a phase by using the measured AC characteristic and identify the object by using the determined combined impedance and the phase;
**characterized in that** the object identification unit (13) is further configured to :
- determine parameters corresponding to a resistive component, a ζ-potential, and a dielectric constant, respectively;
to identify the object by using the determined parameters corresponding to the resistive component, the ζ-potential, and the dielectric constant.

## Patentansprüche

1. Objektidentifikationsverfahren, umfassend:
Zuführen eines Objekts (15), das in einem Lösungsmittel dispergiert ist, zu einem Mikrokanal (10);
Anlegen einer AC-Spannung (Wechselspannung) an zwei Messelektroden (11a, 11b), die an dem Mikrokanal bereitgestellt sind, und Messen einer AC-Charakteristik des Objekts, wenn das Objekt den Mikrokanal durchläuft; und
Bestimmen einer kombinierten Impedanz und einer Phase unter Verwendung der gemessenen AC-Charakteristik;
und Identifizieren des Objekts unter Verwendung der bestimmten kombinierten Impedanz und der Phase;
**dadurch gekennzeichnet, dass**
Parameter, die einer resistiven Komponente, einem ζ-Potenzial bzw. einer Dielektrizitätskonstante des Objekts entsprechen, unter Verwendung der kombinierten Impedanz und der Phase bestimmt werden,
das Objekt unter Verwendung der bestimmten Parameter, die der Widerstandskomponente, dem ζ-Potenzial und der Dielektrizitätskonstante entsprechen, identifiziert wird.

2. Objektidentifikationsverfahren nach Anspruch 1, wobei das Objekt (15) identifiziert wird, indem die Parameter, die der Widerstandskomponente, dem ζ-Potenzial und der Dielektrizitätskonstante entsprechen, auf ein dreidimensionales Koordinatensystem abgebildet werden, in dem seine Achsen die Widerstandskomponente, das ζ-Potenzial bzw. die Dielektrizitätskonstante darstellen.

3. Objektidentifikationsverfahren nach Anspruch 1 oder 2, wobei:
der Parameter, der der Widerstandskomponente entspricht, ein Parameter ist, der einer Größe des Objekts (15) entspricht, der Parameter, der dem ζ-Potenzial entspricht, ein Parameter ist, der einem Oberflächenpotenzial des Objekts (15) entspricht, und
der Parameter, der der Dielektrizitätskonstante entspricht, ein Parameter ist, der mindestens einem einer Struktur und einem Material des Objekts (15) entspricht.

4. Objektidentifikationsverfahren nach einem der Ansprüche 1 bis 3, wobei
eine Gleichphasenkomponente und eine Phasenkomponente extrahiert werden, wobei die Gleichphasenkomponente eine Komponente ist, die der AC-Charakteristik entspricht, und die Phasenkomponente eine Komponente ist, die von der Gleichphasenkomponente abweicht;
eine kombinierte Impedanz und eine Phase unter Verwendung der extrahierten Gleichphasenkomponente und der Phasenkomponente bestimmt werden; und
das Objekt (15) unter Verwendung einer zeitlichen Änderung der kombinierten Impedanz und einer zeitlichen Änderung der Phase identifiziert wird.

5. Objektidentifikationsverfahren nach Anspruch 4, wobei Parameter, die einer Widerstandskomponente und einem ζ-Potenzial des Objekts entsprechen, unter Verwendung einer Wellenform bestimmt werden, die die zeitliche Änderung der kombinierten Impedanz angibt.

6. Objektidentifikationsverfahren nach einem der Ansprüche 1 bis 5, wobei
eine Referenzprobe zur Kalibrierung weiter in dem Lösungsmittel dispergiert wird,
das Lösungsmittel, in dem das Objekt und die Referenzprobe dispergiert sind, dem Mikrokanal (10) zugeführt wird,
eine AC-Charakteristik des Objekts gemessen wird, wenn das Objekt den Mikrokanal durchläuft,
eine AC-Charakteristik der Referenzprobe gemessen wird, wenn die Referenzprobe den Mikrokanal durchläuft, und
das Objekt (15) basierend auf der kombinierten Impedanz und der Phase, die unter Verwendung der AC-Charakteristik des Objekts bestimmt wird, und der kombinierten Impedanz und der Phase, die unter Verwendung der AC-Charakteristik der Referenzprobe bestimmt wird, identifiziert wird.

7. Objektidentifikationsverfahren nach einem der Ansprüche 1 bis 6, wobei eine Frequenz einer AC-Spannung, die an die Messelektroden (11a, 11b) angelegt wird, zwischen 1 kHz und 100 MHZ liegt.

8. Objektidentifikationsverfahren nach einem der Ansprüche 1 bis 7, wobei das Lösungsmittel eine ionische Flüssigkeit oder eine wässrige Lösung ist.

9. Objektidentifikationsverfahren nach einem der Ansprüche 1 bis 8, wobei das Objekt (15) mindestens ein Organismus ausgewählt aus der Gruppe ist, die aus einem Virus, einem Bakterium und einem Mikroorganismus besteht.

10. Objektidentifikationsverfahren nach einem der Ansprüche 1 bis 9, wobei der Mikrokanal (10) eine Breite derart aufweist, dass jeweils nur ein Objekt auf einmal durchlaufen kann.

11. Objektidentifikationsvorrichtung, umfassend:
einen Mikrokanal (10), durch den ein Objekt, das in einem Lösungsmittel dispergiert ist, fließt;
zwei Messelektroden (11a, 11b), die an dem Mikrokanal bereitgestellt sind;
eine Messschaltung (12), die dazu konfiguriert ist, eine AC-Spannung an die beiden Messelektroden (11a, 11b) anzulegen und eine Wechselstromcharakteristik des Objekts zu messen, wenn das Objekt den Mikrokanal durchläuft; und
eine Objektidentifizierungseinheit (13), die dazu konfiguriert ist, eine kombinierte Impedanz und eine Phase unter Verwendung der gemessenen AC-Charakteristik zu bestimmen und das Objekt unter Verwendung der bestimmten kombinierten Impedanz und der Phase zu identifizieren;
**dadurch gekennzeichnet, dass** die Objektidentifizierungseinheit (13) weiter dazu konfiguriert ist:
- Parameter zu bestimmen, die einer Widerstandskomponente, einem ζ-Potenzial bzw. einer Dielektrizitätskonstante entsprechen;
das Objekt unter Verwendung der bestimmten Parameter, die der Widerstandskomponente, dem ζ-Potenzial und der Dielektrizitätskonstante entsprechen, zu identifizieren.

## Revendications

1. Procédé d'identification d'objet comprenant :
l'introduction d'un objet (15) dispersé dans un solvant dans un microcanal (10) ;
l'application d'une tension CA (courant alternatif) à deux électrodes de mesure (11a, 11b) disposées au niveau du microcanal et la mesure d'une caractéristique CA de l'objet lorsque l'objet passe à travers le microcanal ; et
la détermination d'une impédance combinée et d'une phase en utilisant la caractéristique CA mesurée ;
et l'identification de l'objet en utilisant l'impédance combinée et la phase déterminées ;
**caractérisé en ce que**
des paramètres correspondant à une composante résistive, à un potentiel ζ et à une constante diélectrique, respectivement,
de l'objet sont déterminés en utilisant l'impédance combinée et la phase,
l'objet est identifié en utilisant les paramètres déterminés correspondant à la composante résistive, au potentiel ζ et à la constante diélectrique.

2. Procédé d'identification d'objet selon la revendication 1, dans lequel l'objet (15) est identifié en mappant les paramètres correspondant à la composante résistive, au potentiel ζ et à la constante diélectrique sur un système de coordonnées tridimensionnel dans lequel ses axes représentent la composante résistive, le potentiel ζ et la constante diélectrique, respectivement.

3. Procédé d'identification d'objet selon la revendication 1 ou 2, dans lequel
le paramètre correspondant à la composante résistive est un paramètre correspondant à une taille de l'objet (15),
le paramètre correspondant au potentiel ζ est un paramètre correspondant à un potentiel de surface de l'objet (15), et le paramètre correspondant à la constante diélectrique est un paramètre correspondant à au moins l'un parmi une structure et un matériau de l'objet (15).

4. Procédé d'identification d'objet selon l'une quelconque des revendications 1 à 3, dans lequel
une composante en phase et une composante de phase sont extraites, la composante en phase étant une composante correspondant à la caractéristique CA, et la composante de phase étant une composante déviée de la composante en phase ; une impédance combinée et une phase sont déterminées en utilisant la composante en phase extraite et la composante de phase ; et
l'objet (15) est identifié en utilisant un changement temporel de l'impédance combinée et un changement temporel de la phase.

5. Procédé d'identification d'objet selon la revendication 4, dans lequel des paramètres correspondant à une composante résistive et à un potentiel ζ de l'objet sont déterminés en utilisant une forme d'onde indiquant le changement temporel de l'impédance combinée.

6. Procédé d'identification d'objet selon l'une quelconque des revendications 1 à 5, dans lequel
un échantillon de référence pour l'étalonnage est ensuite dispersé dans le solvant,
le solvant, dans lequel l'objet et l'échantillon de référence sont dispersés, est introduit dans le microcanal (10),
une caractéristique CA de l'objet lorsque l'objet passe à travers le microcanal est mesurée,
une caractéristique CA de l'échantillon de référence lorsque l'échantillon de référence passe à travers le microcanal est mesurée, et
l'objet (15) est identifié sur la base de l'impédance combinée et de la phase déterminées en utilisant la caractéristique CA de l'objet et l'impédance combinée et la phase déterminées en utilisant la caractéristique CA de l'échantillon de référence.

7. Procédé d'identification d'objet selon l'une quelconque des revendications 1 à 6, dans lequel une fréquence d'une tension CA appliquée aux électrodes de mesure (11a, 11b) est comprise entre 1 kHz et 100 MHz.

8. Procédé d'identification d'objet selon l'une quelconque des revendications 1 à 7, dans lequel le solvant est un liquide ionique ou une solution aqueuse.

9. Procédé d'identification d'objet selon l'une quelconque des revendications 1 à 8, dans lequel l'objet (15) est au moins un organisme choisi dans le groupe constitué par un virus, une bactérie et un micro-organisme.

10. Procédé d'identification d'objet selon l'une quelconque des
revendications 1 à 9, dans lequel le microcanal (10) a une largeur telle qu'un seul objet peut le traverser à la fois.

11. Appareil d'identification d'objet comprenant :
un microcanal (10) à travers lequel un objet dispersé dans un solvant s'écoule ;
deux électrodes de mesure (11a, 11b) disposées au niveau du microcanal ;
un circuit de mesure (12) configuré pour appliquer une tension CA aux deux électrodes de mesure (11a, 11b) et mesurer une caractéristique CA de l'objet lorsque l'objet passe à travers le microcanal ; et
une unité d'identification d'objet (13) configurée pour déterminer une impédance combinée et une phase en utilisant la caractéristique CA mesurée et identifier l'objet en utilisant l'impédance combinée et la phase déterminées ;
**caractérisé en ce que** l'unité d'identification d'objet (13) est en outre configurée pour :
- déterminer des paramètres correspondant à une composante résistive, à un potentiel ζ et à une constante diélectrique, respectivement ;
pour identifier l'objet en utilisant les paramètres déterminés correspondant à la composante résistive, au potentiel ζ et à la constante diélectrique.
